# EUROPEAN PATENT APPLICATION

(11) **EP 0 562 972 A1**
(43) Date of publication of application: **29.09.1993**
(21) Application number: 93420107.0
(22) Date of filing: 10.03.1993
(51) Int. Cl.: H04N 17/04

(54) **CRT calibrator unit**

(30) Priority: 23.03.1992 US 855260
(71) Applicant: EASTMAN KODAK COMPANY, Rochester, New York 14650-2201 (US)
(72) Inventor: Janson,Jr.,Wilbert Frank, c/o EASTMAN KODAK CO., Rochester, New York 14650-2201 (US); Fulmer, James Walter, c/o EASTMAN KODAK COMPANY, Rochester, New York 14650-2201 (US); Koenig, Norbert, c/o EASTMAN KODAK COMPANY, Rochester, New York 14650-2201 (US); Behlok, Eli Joseph, c/o EASTMAN KODAK COMPANY, Rochester, New York 14650-2201 (US)
(74) Representative: Buff, Michel

(57) **Abstract**

A calibrator unit that can be connected to two different computer architectures. The calibrator unit determines which type computer platform is connected to the unit. The calibrator unit includes a light to frequency converter (LFC) which converts the sensed light into frequency pulses. All the electronics of the calibrator unit are included on a single circuit board. The LFC converts light intensity into frequency pulses which are counted. The brighter the light sensed, the higher the count obtained during an integration period. The count value is proportional to intensity. The entire unit attaches to the face of a display of the computer being calibrated. The synchronization signal is obtained from the refresh sweep of the display not by a wired connection to the display.

## Description

### Cross References to Related Applications

This application is related to U.S. Application entitled Monitor Calibrator Housing And Mounting Bracket having U.S. Serial No. 855,399 and Luminance Measurement Method And Apparatus having U.S. Serial No. 855,281 both filed on March 23, 1992 and assigned to Eastman Kodak Co. and incorporated by reference herein.

### BACKGROUND OF THE INVENTION

### Field of the Invention

The present invention is directed to a calibrator unit for calibrating displays, such as cathode ray tube (CRT) displays, liquid crystal displays and electroluminisent displays, for computers and, more particularly, to a calibrator unit that uses a low cost light to frequency converter sensor, fits into a single package that is attached to the display surface of a display is compatible with several types of computer buses and automatically obtains synchronization if necessary from the light produced by the display.

### Description of the Related Art

Conventional calibrator systems, such as the Supermac and Radius display calibrators, include a light sensor in a calibrator head and the electronics for converting the sensed light into some sort of an electrical signal usable by an electronics package which is separate from the calibrator head. Such calibrator systems are expensive to manufacture and test because of theseparate packages used for the light sensor and the electronic components. These calibrator systems also use expensive light sensors such as photometers, radiometers, etc. making it difficult for users of low cost computers, such as IBM PCs, Apple Macintosh and Sun computers, to afford the calibrator systems. These expensive light sensors have used analog integrators which require stable low-leakage capacitors and low-drift amplifiers. When required to convert the signal to digital form, an analog to digital converter with a high enough bit density is necessary to accurately represent the signal. The analog to digital converter also requires a stable reference voltage source. The longer the integration period for capturing an accurate value for the light intensity the more stringent the component parameters. In addition, conventional calibrator units are compatible with only a single type of computer such as an IBM PC and different units must be manufactured for different types of computers. Some calibrator units also must be connected to the electronics of the CRT display which is being calibrated to obtain the synchronization signal. This is a particular drawback when the electronics of the display are not readily accessible. The location of the electronics in a separate base unit is also inconvenient for a user because space is occupied on the user's desktop.

### SUMMARY OF THE INVENTION

It is an object of the present invention to produce a complete calibrator unit that can be attached to the surface of a display screen.

It is another object of the present invention to provide all the electronics of the unit in a compact form located in a head which can be attached to the display screen.

It is also an object of the present invention to eliminate the need for a base unit that sits on a desk top.

It is a further object of the present invention to use a low cost light to frequency converter sensor that does not require expensive components.

It is an additional object of the present invention to be compatible with a multiplicity of CPU architecture platforms and to automatically sense the platform type.

It is also an object of the present invention to provide a simple, low cost light integrator.

It is another object of the present invention to obtain synchronization from the light produced by the CRT display rather than from the electronics of the display itself.

It is another object of the present invention to produce a calibrator with a higher resolution than those using analog to digital converters.

The above objects can be attained by a calibrator unit that provides at least two types of interfaces which can be connected to two different computer architectures. The calibrator unit determines which type computer architecture platform is connected to the unit and executes the appropriate communication software. The calibrator unit includes a light to frequency converter which converts the sensed light into frequency pulses and all of the electronics of the calibrator unit, including a voltage regulator, are included on a single circuit board in the unit. The light to frequency converter converts light intensity into frequency pulses which are counted. The brighter the light sensed, the higher the count obtained during fixed a count interval or integration period to provide a count value proportional to intensity. The entire unit attaches to the face of the display of the computer being calibrated and obtains the synchronization signal from the refresh sweep of a display. Power for the unit comes from the host or from an auxiliary power supply.

These together with other objects and advantages which will be subsequently apparent, reside in the details of construction and operation as more fully hereinafter described and claimed, reference being had to the accompanying drawings forming a part hereof, wherein like numerals refer to like parts throughout.

### BRIEF DESCRIPTION OF THE DRAWINGS

Fig. 1 is a block diagram showing how the present invention 10 relates to multiple computers;
Fig. 2 illustrates the electrical components of the calibrator unit 10 of Fig. 1;
Fig. 3 illustrates the electronic subsystems of the sensor 32 of Fig. 2;
Fig. 4a illustrates the waveform produced by the sensor 32 when attached to the faceplate of a CRT display while Fig. 4b illustrates typical light output of the CRT display;
Fig. 5 depicts the component layout of the calibrator unit 10 allowing a single compact screen attachable unit 10;
Figs. 6 and 7 illustrates the wiring layout of the component layout of Fig. 5; and
Fig. 8 illustrates a calibrator unit. 100 attached to the face 102 of a CRT display 104 for a computer 106.

### DESCRIPTION OF THE PREFERRED EMBODIMENTS

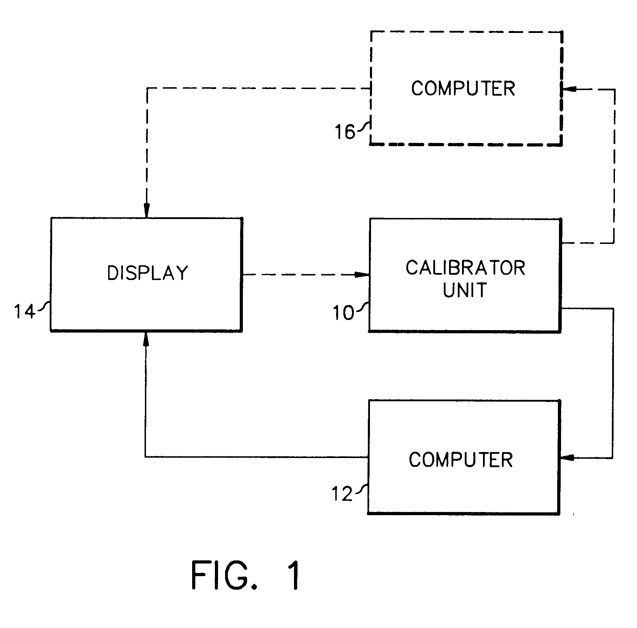

The present invention is designed for use in calibrating several different types of displays, however, for simplicity the discussion will be limited to cathode ray tube type displays. As illustrated in Fig. 1 the present invention includes a calibrator unit 10 which is connected to a computer 12. The computer 12 drives a typical cathode ray tube (CRT) type display 14 which provides light stimulus to the calibrator unit 10. A description of the mechanical construction of the calibrator unit 10 can be found in the housing and mounting bracket application previously mentioned. The display 14 and computer 12 can be an IBM type PC type computer or as illustrated by the dashed lines the calibrator unit 10 can be used by a different computer 16, such as an Apple Macintosh computer or Sun computer, which can drive the same type or a different type of display. That is, the invention can interface with different computer architectures.

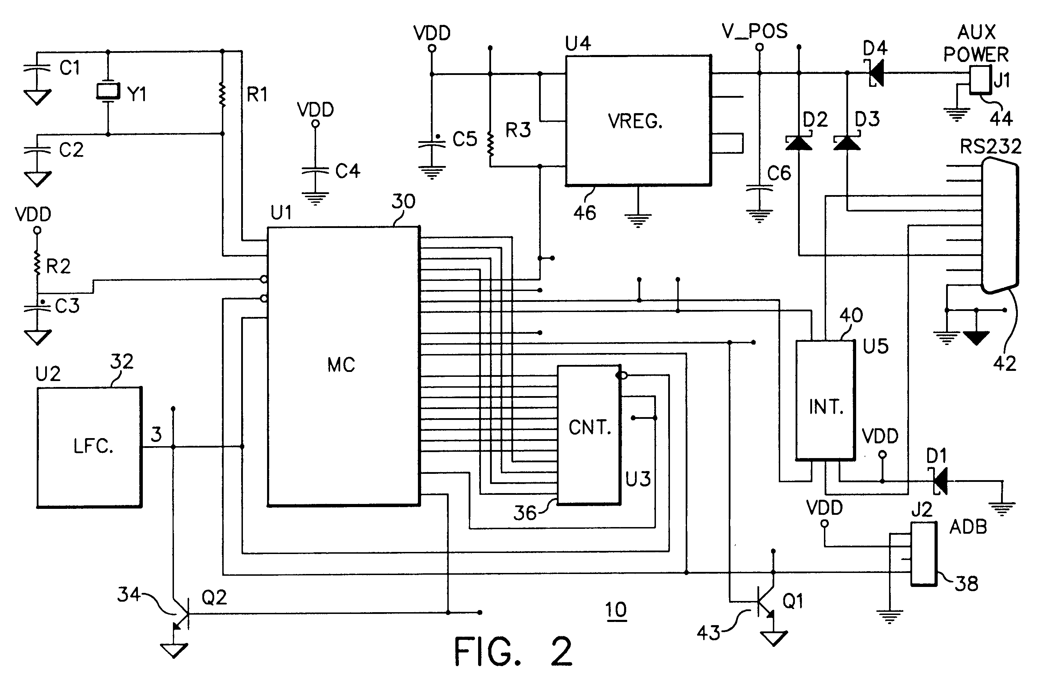

The calibrator unit 10 as illustrated in Fig. 2 includes a microcomputer or microcontroller 30 which controls the operation of the calibrator unit 10. The microcontroller 30 is preferably the Motorola MC68HC05P1 microcontroller. The process performed by the microcontroller 30 to obtain synchronization with the refresh cycle of the CRT display 14 and convert the light sensed by sensor 32 into a count indicative of the light level is described in detail in the related application directed to luminance measurement previously mentioned. During operation the sensor 32 produces a frequency signal which is proportional to the intensity of the light being received by the sensor 32. The microcontroller 30 operates transistor 34 to allow the pulses produced by the sensor 32 to be counted by binary counter 36 which is preferably a 74HC4040 available from Philips. When the integration period for measuring the light is completed, the microcontroller 30 operates transistor 34 to stop the pulses from reaching counter 36. The microcontroller 30 then, depending upon which type of computer is connected thereto transfers the count value out over an Apple Desktop Bus (ADB) connection 38 or through an RS232 type bus interface 40 and connector 42 suitable for an IBM PC type computer or Sun computer. The interface circuit 40 is preferably a DS1275S available from Dallas Semiconductor. Resistor R2 and capacitor C3 provide a reset signal for the microcontroller 30 which causes the microcontroller 30 to begin execution at the beginning of the program. A ceramic resonator Y1 along with capacitors C1, C2, and R1 provide the clock oscillator for the microcontroller 30. The frequency signal from the sensor 32 is also input to the microcontroller 30, so that it can detect the peaks of light from the monitor and calculate the proper start and stop times. The microcontroller 30 uses these times to control transistor 34 and the binary counter 36 during a light measurement.

The microcomputer communicates with the different host computers utilizing one of two conventional communication methods or protocols. The microcomputer can communicate with the Apple Desktop Bus (ADB). The ADB is a serial interface used by Apple computers for communication with peripheral devices such as a keyboard and mouse. Apple Computer, Inc. owns patents on the Apple Desktop Bus. A license to utilize the ADB can be negotiated with Apple Computer, Inc. The ADB is a bi-directional serial interface. The signal line at connector 38 is the input/output signal line. The signal is read may the microcontroller 30. The microcontroller 30 drives transistor 43 which is connected to the signal line. The microcontroller 30 can also communicate with a host computer on a RS232 compatible serial interface. The microcomputer talks with the RS232 interface integrated circuit 40. Circuit 40 converts the voltages form the 5v signals compatible with the microcontroller 30 to the voltage levels compatible with the RS232 serial communication interface at connector 42.

Power for the system is obtained from one of three sources. If the system is connected to the ADB serial interface, power is obtained from the Apple computer. The ADB can provide +5v DC power at connector 38. If the host computer system is using a RS232 serial interface, input power for the voltage regulator can be obtained from the request to send signal (RTS) and the data terminal ready signal (DTR) from the RS232 serial port connector 42. The host computer can set these signals high. Some computer's serial ports are not capable of providing enough power on these lines so an auxiliary power jack 44 is provided on the RS232 connector. Shottky diodes D2, D3, and D4 are used to isolate the voltages from each other. The input power (V_POS) is the input voltage for the voltage regulator 46. Voltage regulator 46, which is preferably a LP2951CM from National Semiconductor provides +5v DC for the system when the unit is connected to a RS232 serial port.

The preferred implementation of the system uses a common connector system at the calibrator unit 10. Two different cables are preferable. One end of each cable connects with the appropriate connector at the unit 10 and the other end has the appropriate connector of the host system that was desired. The host connector would plug directly into the host. The unit 10 eliminates the need for additional packages. As a further alternative a single connector in the unit 10 could be provided for two different cables each with a different connector for the host. Alternative implementations could eliminate the common connector and attach the desired cable during manufacture. Another alternative implementation of the system is to communicate with only the ADB communication system. In this case, the circuit can be simplified by removing the components that are used for supporting RS232 communication 40, 46, D1, D2, D3, D4, R3, C5, and C6 are removed if implementing such a system. Another alternative removes transistor 43 if implementing a RS232 only system.

The microcomputer automatically determines to which computer 12 or 16 is connected. After a power up of the system, the microcontroller 30 tests the input/output line of the ADB interface during the initialization process, If the calibrator system is connected to the ADB communication system, the input signal will be detected high. If the signal is not detected going high within a certain time period, the microcontroller 30 defaults to using the RS232. provided on the RS232 connector. Shottky diodes D2, D3, and D4 are used to isolate the voltages from each other. The input power (V_POS) is the input voltage for the voltage regulator 46. Voltage regulator 46, which is preferably a LP2951CM from National Semiconductor provides +5v DC for the system when the unit is connected to a RS232 serial port.

The preferred implementation of the system uses a common connector system at the calibrator unit 10. Two different cables are preferable. One end of each cable connects with the appropriate connector at the unit 10 and the other end has the appropriate connector of the host system that was desired. The host connector would plug directly into the host. The unit 10 eliminates the need for additional packages. As a further alternative a single connector in the unit 10 could be provided for two different cables each with a different connector for the host. Alternative implementations could eliminate the common connector and attach the desired cable during manufacture. Another alternative implementation of the system is to communicate with only the ADB communication system. In this case, the circuit can be simplified by removing the components that are used for supporting RS232 communication 40, 46, D1, D2, D3, D4, R3, C5, and C6 are removed if implementing such a system. Another alternative removes transistor 43 if implementing a RS232 only system.

The microcomputer automatically determines to which computer 12 or 16 is connected. After a power up of the system, the microcontroller 30 tests the input/output line of the ADB interface during the initialization process, If the calibrator system is connected to the ADB communication system, the input signal will be detected high. If the signal is not detected going high within a certain time period, the microcontroller 30 defaults to using the RS232 communication method.

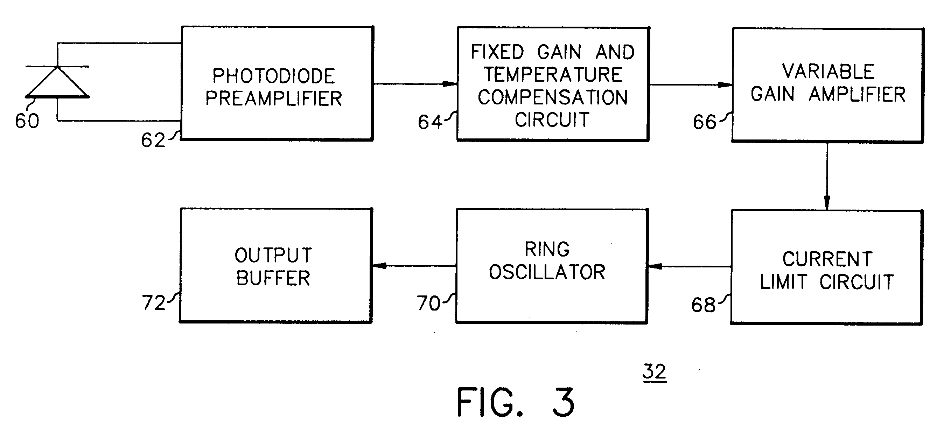

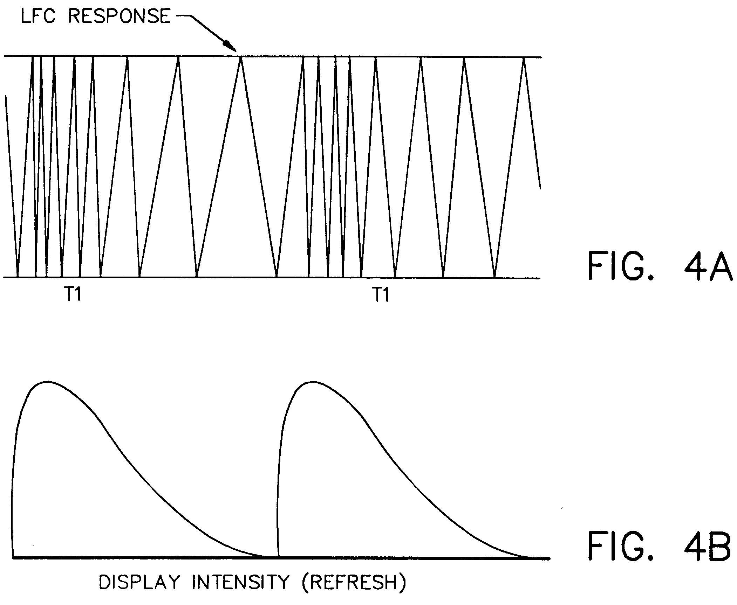

The components of the sensor 32 when constructed from components on an integrated circuit are illustrated in more detail in Fig. 3. A photodiode 60 is connected to a photodiode preamplifier 62. The preamplifier amplifies the photocurrent produced by the photodiode 60 and provides the signal to a fixed gain and temperature compensation circuit 64. The output of the circuit 64 is provided to a variable gain amplifier 66 which is used to calibrate the operation of the sensor 32. A current limiting circuit 68 is provided connected to the variable gain amplifier 66. The current limiting circuit 68 provides a signal to a three gate (flip flop) ring oscillator 70 which oscillates in accordance with the magnitude of the signal produced by the current limiting circuit 68. The output of the ring oscillator 70 is provided to an output buffer 72 which is connected to the counter 36 shown in Fig. 2. During operation a photo current produced by photodiode 60 is converted to an AC waveform whose frequency is directly proportional to the current. The oscillating output is then coupled to an event counter, such as counter 36 or microcontroller 30, which will count each cycle of the AC waveform as an event. Each time the signal level passes the threshold for the input of the event counter it is counted. If the counting occurs for an established time period the count will be a value directly proportional to the integral of the brightness level during the same period of time. Fig. 4b shows what a typical display brightness may be over time, while Fig. 4a shows the oscillating output of the sensor 32 during the same period. Fig. 4a shows a triangular output when in the practice output is a square wave due to the flip flops of the ring oscillator 70. When the brightness is higher the frequency is higher, when it is lower the frequency is lower. A discrete component implementation of conventional components would include a photodiode, a current to voltage conversion amplifier connected to the photodiode, a voltage to frequency converter connected to the conversion amplifier and several flip flops connected to the converter producing the pulse output. The sensor 32 as illustrated in Fig. 3, as an application specific integrated circuit, is designated by Kodak part number 237092. This sensor 32 is commonly found in the Kodak camera model S500. Other light to frequency converters, such as the TSL220 available from Texas Instruments Inc., could be used.

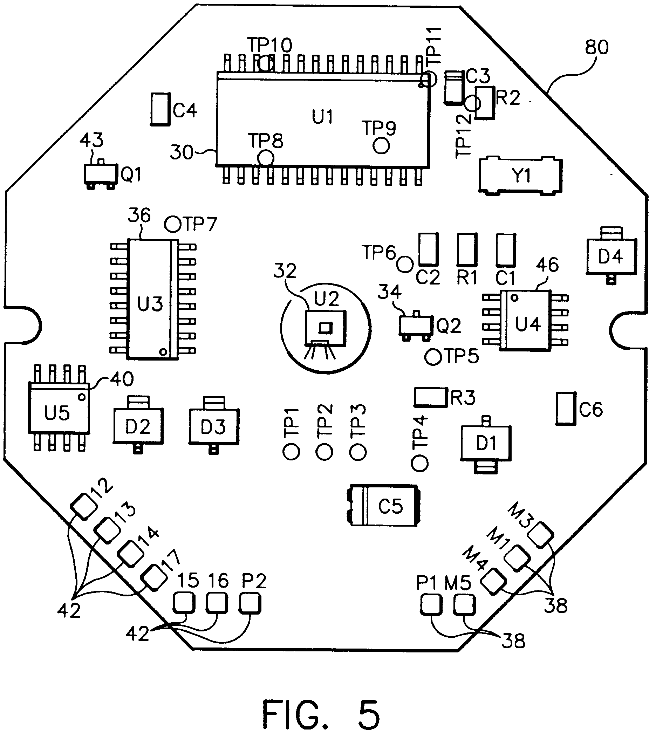

A single circuit board layout 80 of the components of the calibrator unit 10 that allows the entire unit to fit in a compact single unit attachable to the faceplate of a display 14 is illustrated in Fig. 5. The layout positions the sensor 32 in the center of the board 80 with the connection location 38 and 42 for the two types of interfaces located on the lower periphery allowing a cable exit in the housing to be positioned close to both locations 38 and 42. The sensor 32 is mounted with chip on board technology and then encapsulated with a clear coating.

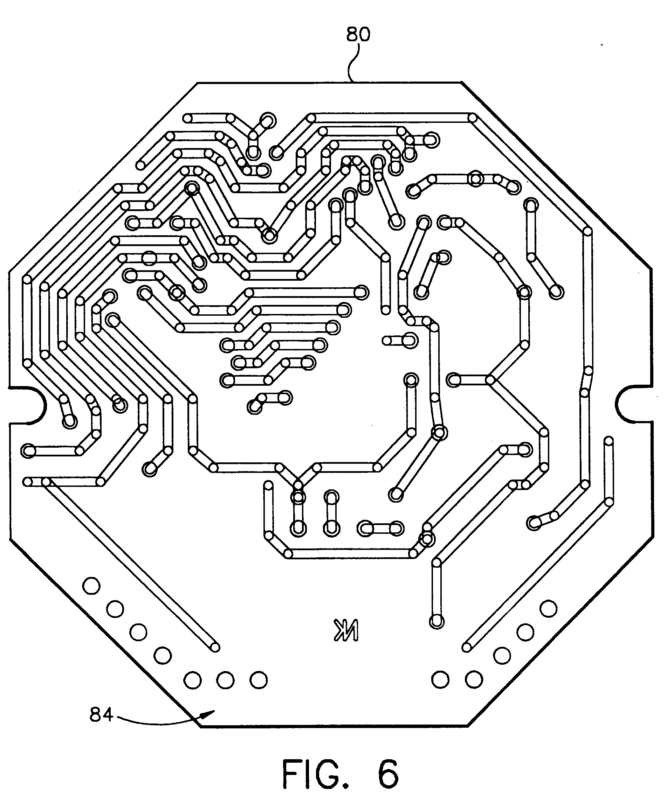

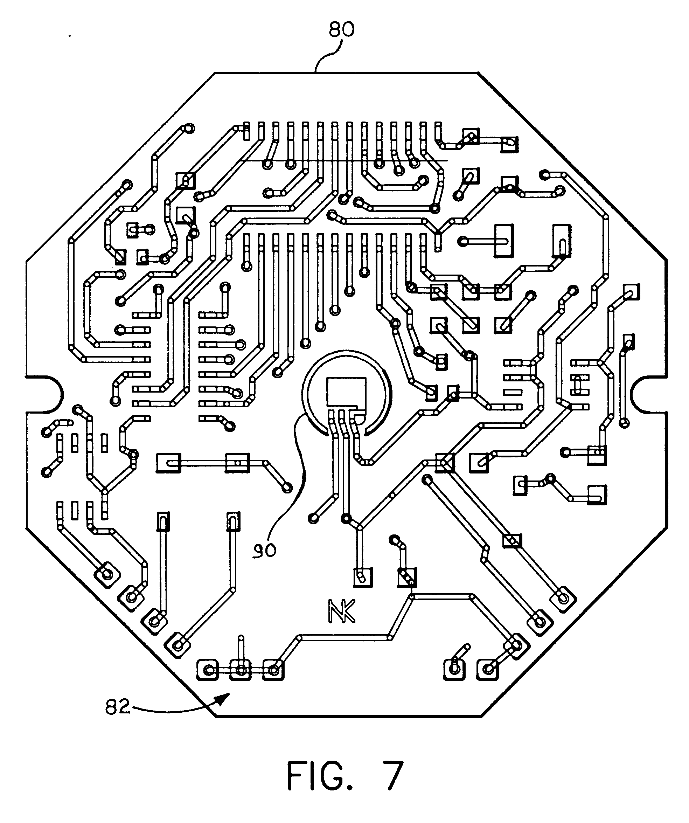

Figs. 6 and 7 illustrate the two sided wiring layout for the board 80. Fig. 7 illustrates the component side 82 of board 80 and Fig. 6 illustrates the noncomponent side 84. To obtain a compact unit 10 the wiring between components must travel on both sides of the board 80. For example the wiring between the microcontroller 30 and the counter 36 starts on the noncomponent side 84, runs through to and along the component side 82 and then runs back through to and along the noncomponent side 84. A copper ring 90 and an overlay opening create a containment for the clear coating for the sensor 32. The wiring for the components is kept relatively far away from thy sensor 32 to prevent electronic noise problem. Various test points are also provided to facilitate testing. A single sided circuit board could be used and a packaged sensor could be substituted for the chip on board sensor.

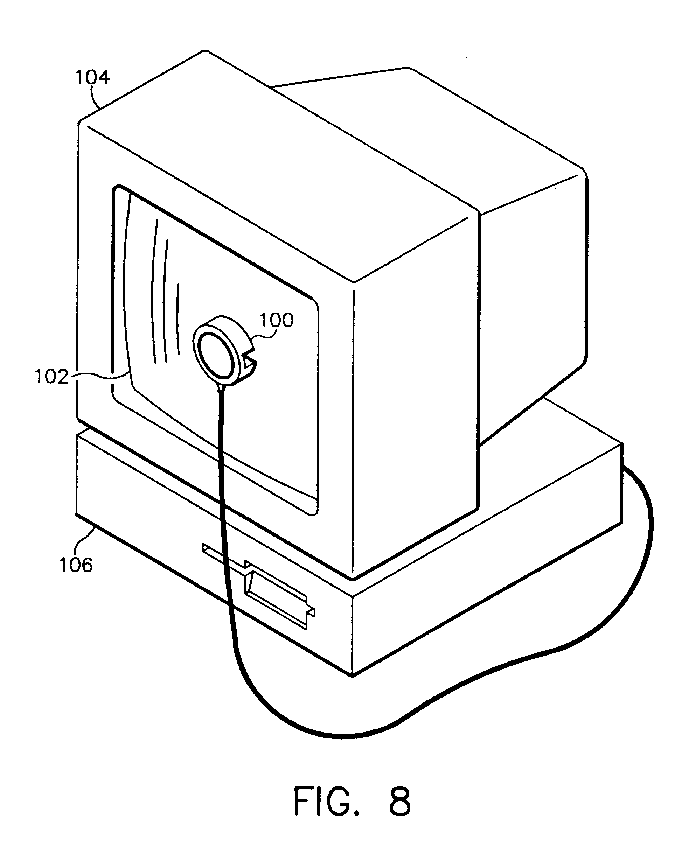

Fig. 8 illustrates a calibrator unit 100 in a housing in accordance with the present invention attached to the face 102 of a CRT display 104 for a computer 106.

The many features and advantages of the invention are apparent from the detailed specification and thus it is intended by the appended claims to cover all such features and advantages of the invention which fall within the true spirit and scope of the invention. Further, since numerous modifications and changes will readily occur to those skilled in the art, it is not desired to limit the invention to the exact construction and operation illustrated and described, and accordingly all suitable modifications and equivalents may be resorted to, falling within the scope of the invention. For example, it is possible to eliminate counter 36 and have microcontroller 30 count the pulses from sensor 32, however, a faster more expensive microcomputer would be required. The present invention can also be used as a densitometer or reflectometer when a printed page is illuminated by a reference light source and appropriate optics are provided to focus the light reflected from the page onto the sensor 32.

## Claims

1. A display calibrator unit for a light source, comprising:
a housing, including:
a light sensor exposed to light from the light source and producing a light signal; and
conversion means for converting the light signal into a light value.

2. A display calibrator unit, comprising:
a light sensor producing a light signal;
conversion means for converting the light signal into a light value;
a first interface, connected to said conversion means, adapted to be connected to a first interface and to provide the light value in a first interface format; and
a second interface, connected to said conversion means, adapted to be connected to a second interface different from the first interface and to provide the light value in a second interface format different from the first interface format.

3. A unit as recited in claim 2, wherein said light sensor produces a pulse signal having a frequency proportional to an intensity of light received by the light sensor and said conversion means comprises:
a counter connected to said sensor and counting the pulses produced by said sensor to produce a count during a count period;
a microcontroller connected to said counter and said first and second interfaces controlling the count period of the counter and transferring the count to one of the first and second interfaces.

4. A calibration unit, comprising:
a circuit board;
a light sensor positioned on said circuit board to receive light;
a counter positioned on said circuit board and connected to said sensor;
a microcontroller positioned on said circuit board and connected to said counter;
a first interface circuit positioned on said circuit board and connected to said microcontroller; and
a second interface circuit positioned on said circuit board and connected to said microcontroller and output pins.

5. A calibration unit as recited in claim 4, wherein said microcontroller determines which of said first and second interfaces is active.

6. A unit as recited in claim 4, wherein said light sensor is positioned in a center of said circuit board.

7. A unit as recited in claim 4, wherein said circuit board has first and second sides further comprising:
first output connection points connected to said first interface circuit and provided on the first side of said circuit board; and
second output connection points connected to said second interface circuit and provided on the second side of said circuit board.

8. A calibrator unit, comprising:
a circuit board;
a microcontroller mounted on said circuit board;
a light sensor mounted on said circuit board;
a counter mounted on said circuit board; and
a pattern of wiring on both sides of said circuit board connecting said microcontroller, said sensor and said counter.

9. A unit as recited in claim 8, wherein first and second bus connections are formed on said circuit board and connects by said pattern to said microcontroller, said first and second interface connectors adapted to be connected to first and second different types of interfaces.

10. A calibrator unit, comprising:
a first interface adapted to being connected to a first computer having a first display;
a second interface adapted to being connected to a second computer having a second display and different from said first computer; and
a microcontroller connected to said first and second interfaces, determining which of said first and second interfaces is active and calibrating a corresponding one of the first and second displays.

11. A light integrating unit, comprising:
a light to frequency converter sensor producing pulses corresponding to an intensity of light sensed by said sensor; and
a counter counting the pulse for a period of time and providing a count proportional to the intensity.

12. A unit as recited in claim 11, further comprising:
means for coupling said sensor to a computer display; and
means for providing the count of said counter to a computer.
